# EUROPEAN PATENT APPLICATION

(11) **EP 0 826 645 A2**
(43) Date of publication of application: **04.03.1998**
(21) Application number: 97306184.9
(22) Date of filing: 14.08.1997
(51) Int. Cl.: C04B 35/486

(54) **Black zirconia sintered body and its preparation**

(30) Priority: 02.09.1996 JP 231681/96
(71) Applicant: SUMITOMO ELECTRIC INDUSTRIES, LTD., Osaka-shi, Osaka (JP)
(72) Inventor: Ukegawa, Harutoshi, 1-1 Koyakita 1-chome, Itami-shi, Hyogo (JP); Kuwagaki, Yasuyuki, 1-1 Koyakita 1-chome, Itami-shi, Hyogo (JP); Higuchi, Matsuo, 1-1 Koyakita 1-chome, Itami-shi, Hyogo (JP)
(74) Representative: Rackham, Stephen Neil

(57) **Abstract**

A black zirconia sintered body comprises a partially stabilized zirconia as a main component and a colorant component of at least one oxide selected from the group of oxides of the group 2a, 4a, 6a, and 8 elements. The amount of the at least one oxide is 0.1 to 0.8% by weight in terms of the amount of each oxide and 0.2 to 3.0% by weight in total. Both the surface and the interior of the sintered body have a black colour with L*, a* and b* falling within the following respective ranges L* ≤ 25, -15 ≤ a* ≤ 6, and -9 ≤ b* ≤ 5 according to the sensory colour index specified in JIS Z8729. The sintered body has a four-point flexural strength of not less than 100kg/mm² as measured according to the procedure set forth in JIS R1601. The black zirconia sintered body is produced by mixing a powder, which, upon heating, can be converted to the above colorant component, with the partially stabilized zirconia powder, molding the mixture into a compact, sintering the compact at a temperature in the range of from 1,300 to 1,600°C in vacuo or in an oxidizing atmosphere.

## Description

The present invention relates to a decorative member using a black zirconia sintered body.

Zirconia sintered bodies, by virtue of their excellent mechanical properties, such as toughness and bending strength, are expected to be used in a wide range of applications utilizing these features. Among them, various colored zirconia sintered bodies are used as decorations, and especially those having a black color are utilized as watch frames, watch bands, tie pins, buttons and the like.

Various attempts have been made to color high-strength zirconia (ZrO₂). A main method used for these attempts is to add a colorant component, capable of being blackened upon sintering, to zirconia, or to fire zirconia in a reducing atmosphere or a carbon atmosphere.

For example, Japanese Patent Laid-Open No. 90872/1985 discloses (1) a black zirconia sintered body prepared by sintering a compact of a stabilized zirconia powder in a carbon-containing reducing atmosphere to permit carbon to penetrate into the compact and, at the same time, to react zirconia with carbon to produce, within the compact, zirconium carbide (ZrC) which is dispersed as a colorant component in the resultant sintered body. Japanese Patent Laid-Open No. 100059/1988 discloses (2) a zirconia sintered body prepared by disposing carbon around a compact of a zirconia powder and sintering the compact in a nonoxidizing atmosphere to permit carbon to penetrate into the compact and, as with the above (1), to produce carbon and ZrC in the compact, thereby preparing a blackened zirconia sintered body. Further, Japanese Patent Publication No. 12978/1995 discloses (3) a black zirconia sintered body prepared by adding and incorporating an oxide of a group 4a, 6a, 7a, or 8 element as a colorant component, sintering the mixture in an oxidizing atmosphere, a vacuum atmosphere, or a reducing atmosphere, and again sintering the mixture in a carbon-containing atmosphere, and Japanese Patent Publication No. 9062/1991 discloses (4) a black zirconia sintered body prepared by previously adding and mixing an oxide similar thereto and carbon in combination and sintering the mixture in a nonoxidizing atmosphere.

Regarding a coloring method not using any colorant component, Japanese Patent Publication No. 67983/1991 discloses (5) a method for preparing a black zirconia sintered body, wherein a zirconia sintered body with a stabilizer, such as Y₂O₃, added thereto is treated in a reducing atmosphere at 1,200°C or above.

Among the above prior art methods, the methods (1) and (2) are such that, in firing a zirconia compact, either carbon black is disposed around the compact or a carbon component is incorporated into a nonoxidizing atmosphere as a firing atmosphere and the compact is carburized from the surface thereof. In this case, a difference in carburization carbon concentration between the interior of the sintered body and the surface of the sintered body is likely to occur, and, hence, a difference in color tone of black between the surface of the sintered body and the interior of the sintered body is likely to occur, unfavorably making it impossible to prepare a black sintered body having a satisfactorily deep and homogeneous color tone.

In the method (3), firing is conducted using only the originally added colorant component to conduct base coloring, the fired product is placed in a carbon case, followed by refiring in a carbon-containing atmosphere to prepare ZrC as a black colorant component, thus preparing a black-colored sintered body. In this method, however, the second firing cannot provide a black sintered body having a satisfactorily homogeneous color tone for the same reason as described above.

The method (4) can offer relatively homogeneous coloring. However, the sintered body does not have a deep black tone but a thin or colored black tone.

In the method (5), although the blackening effect attained by a reducing gas is satisfactorily observed in the surface portion, a homogeneous tone extending to the interior of the sintered body cannot be achieved.

As described above, any zirconia sintered body having a solid black tone which can be fully satisfactory as a decorative member could not have been prepared in the art. In order to solve the above problems, the present invention has the following constitution. Specifically, according to the present invention, a black zirconia sintered body comprises a black zirconia sintered body comprising partially stabilized zirconia as a main component and a colorant component consisting of at least one oxide of the group 2a, 4a, 6a, and 8 elements, the amount of the at least one oxide being between 0.1 and 0.8% by weight in terms of the amount of any one oxide and between 0.2 and 3.0% by weight in total, both the surface and the interior of the sintered body having a black colour with L*, a* and b* falling within the following respective ranges L* ≤ 25, -15 ≤ a* ≤ 6, and -9 ≤ b* ≤ 5 according to the sensory colour index specified in JIS Z8729, the sintered body having a four-point flexural strength of not less than 100 kg/mm² as measured according to the procedure set forth in JIS R1601.

The above black zirconia sintered body may further include carbon in an amount up to 2.5% by weight based on 100% by weight in total of the partially stabilized zirconia and the colorant component. It may also include aluminium oxide alone and/or an aluminate of the element constituting the colorant component in an amount of 0.1 to 2.0% by weight, in terms of aluminium oxide, based on 100% by weight in total of the partially stabilized zirconia as the main component and the colorant component.

The black zirconia sintered body of the present invention is prepared by a process comprising the steps of: mixing between 97 and 99.8% by weight of a partially stabilized zirconia powder with at least one colorant component powder consisting of at least one compound of group 2a, 4a, 6a and 8 elements, the amount of at least one powder being between 0.1 and 0.8% by weight in terms of any one compound and between 0.2 and 3.0% by weight in total, thereby preparing a mixed powder, molding the mixed powder to prepare a compact; and sintering the compact at a temperature in a range from 1,300 to 1,600°C in a vacuum having a pressure of not less than 10⁻² Torr or in an oxidizing atmosphere.

In the case of an oxidizing atmosphere, bringing the partial pressure of oxygen to not less than 120 Torr is particularly preferred. Further, a carbon powder or a compound powder capable of leaving carbon upon the sintering may be previously added in a small amount in a step of mixing the material powders. It is also possible to use a method wherein, in the step of powder mixing, an aluminum oxide powder is additionally incorporated in an amount of 0.1 to 2.0% by weight, in terms of outer percentage, based on the total amount of the partially stabilized zirconia powder as the main component and the colorant component powder. If necessary, the sintered body may be further subjected to hot isostatic pressing under a pressure of not less than 200 kg/cm² in the temperature range of from 1,300 to 1,600°C.

### DETAILED DESCRIPTION OF THE PREFERRED EMBODIMENTS

As described above, an object of the present invention is to provide a black zirconia sintered body which is useful mainly as a decorative component and has a deep color tone, unattainable by the prior art, that is, which is homogeneous and smooth throughout the sintered body, and a process for preparing the same.

The main component of the black zirconia (hereinafter referred to simply as "ZrO₂") sintered body according to the present invention is partially stabilized ZrO₂ comprised of ZrO₂ with a known stabilizer, such as Y₂O₃, CeO₂, MgO and/or CaO, dissolved therein in a solid solution. The amount of the partially stabilized ZrO₂ is in the range of from 97 to 99.8% by weight based on the whole sintered body. When the amount of the partially stabilized ZrO₂ is less than 97% by weight, the amount of the colorant component as the balance is excessively large, any sintered body having high strength characteristic of ZrO₂, that is, a sintered body having a strength of not less than 100 kg/mm² in terms of the four-point flexural strength cannot be obtained. On the other hand, when the amount exceeds 99.8% by weight, the coloring effect contemplated by the present invention cannot be attained.

The black ZrO₂ according to the present invention contains a colorant component, which is homogeneously dispersed in partially stabilized ZrO₂ sintered body as the main component to color black, comprising at least one oxide selected from the group consisting of oxides of the group 2a, 4a, 6a, and 8 elements. The at least one oxide is dispersed in an amount of 0.1 to 0.8% by weight in terms of the amount of each oxide and 0.2 to 3.0% by weight in total based on the whole sintered body. The colorant component may be present, in the sintered body, in the form of an oxide containing only one of the individually added elements (hereinafter referred to as "single oxide") (for example, MgO, TiO₂, Cr₂O₃, or Co₃O₄), an oxide containing two or more of the individually added metallic elements (hereinafter referred to as "composite oxide") (for example, CO₂NiO₄, NiCrO₃, HfNiO₃, MgCr₂O₄, or CoCr₂O₄), or in such a form that both the single oxide and the composite oxide are present. When the amount of any oxide is less than 0.1% by weight or when the total amount of the oxides is less than 0.2% by weight, a sintered body having a deep black tone falling within the above sensory color range contemplated in the present invention cannot be prepared. On the other hand, when the amount of any oxide exceeds 0.8% by weight or when the total amount of the oxides exceeds 3.0% by weight, the effect of coloring the sintered body is saturated and, at the same time, the strength characteristic of ZrO₂, that is, a four-point flexural strength of not less than 100 kg/mm² cannot be provided.

When the depth of the black color tone of the black ZrO₂ sintered body according to the present invention is defined in terms of sensory color, both the surface and the interior of the sintered body have index specification L*, a* and b*, showing the sensory color specified in JIS Z8729 (numerical values provided by the above specification established by Commission Internationale de l'Eclairage (CIE) in 1976),falling within the following respective ranges: L* ≤ 25, -15 ≤ a* ≤ 6, and -9 ≤ b* ≤ 5, preferably L* ≤ 20, -1 ≤ a* ≤ 1, and -3 ≤ b* ≤ 2. In this case, it should be noted that, since the sensory color depends upon the surface roughness of the object to be measured, the surface roughness of the surface to be measured should be not more than 0.02 µm in terms of Ra specified in JIS B0601. In this case, L* represents an index for lightness and a* and b* each represent an index for chromaticity. The larger the L* value, the larger the lightness, that is, the whiteness; the larger the a* value, the larger the redness; the lower the a* value, the larger the greenness; the larger the b* value, the larger the yellowness; and the lower the b* value, the larger the blueness. The sensory color value referred to in the present invention is a value obtained by separating light reflected from an object to be measured into its spectral components and using a spectrophotometric colorimeter to measure each numeric value of index specified in JIS Z8729.

From the viewpoints of the economy of manufacture and the coloring, the oxide dispersed as the colorant component is preferably such that the oxide containing a group 2a element is an oxide containing magnesium, the oxide containing a group 4a element is an oxide containing titanium and/or hafnium, the oxide containing a group 6a element is an oxide containing chromium, and the oxide containing a group 8 element is an oxide containing iron, cobalt and/or nickel. Single oxides usable herein include, for example, MgO, TiO₂, HfO₂, Cr₂O₃, FeO, Co₃O₄, and NiO, and composite oxides usable herein include, for example, Co₂NiO₄, NiCrO₃, Co₂CrO₄, CoCrO₄, HfNiO₃, NiCrO₄, and Mg₂Hf₅O₁₂.

Among the oxides of the above seven elements, particularly preferred is a form wherein an oxide of chromium as the oxide of the group 6a element and an oxide of cobalt as the oxide of the group 8 element are contained together each in the form of a single oxide, a form wherein these two elements are contained in a composite oxide, or a combination of these forms. In this case, the weight ratio of cobalt element to chromium element is still preferably regulated to fall within the following range: 0.3 ≤ Co/Cr ≤ 2. This imparts a more deeper color tone to the sintered body. Specifically, a sintered body can be prepared which has a color tone, in terms of the above sensory color index, falling within the following L*, a* and b* ranges: L* ≤ 20, -1 ≤ a* ≤ 1, and -3 ≤ b* ≤ 2.

The black ZrO₂ sintered body of the present invention may contain a small amount of free carbon homogeneously dispersed therein. This carbon serves as one auxiliary coloring component to more accelerate black coloring of the sintered body, thus serving as an auxiliary component for realizing a deeper black color tone. In this case, the amount of carbon is up to 2.5% by weight based on the whole sintered body from the viewpoint of preventing inhibition of the sintering.

Further, the black ZrO₂ sintered body of the present invention may contain, separately from the above colorant component, aluminum oxide as a single substance and/or an aluminate of any metallic element constituting the above colorant component in an amount in the range of from 0.1 to 2.0% by weight in terms of aluminum oxide. Homogeneous dispersion of aluminum oxide as the single substance or the aluminate in an amount in the above range can inhibit the grain growth of the partially stabilized ZrO₂ crystal during the sintering, contributing further improved flexural strength of the sinter. Specifically, when neither aluminum oxide as the single substance nor the aluminate is dispersed, the maximum average particle diameter of the partially stabilized ZrO₂ crystal is 0.6 µm, while dispersion of aluminum oxide as the single substance and/or the aluminate permits the maximum average particle diameter to be limited to 0.4 µm. This results in realization of a sintered body having a four-point flexural strength of not less than 110 kg/mm². In some cases, when the aluminate is formed, it serves also as a part of the colorant component. Composite oxides in the form of the above aluminate usable herein include, for example, MgAl₂O₄, COAl₂O₄, MgCrAlO₄, and NiAl₂O₄.

The process for preparing a black ZrO₂ sintered body according to the present invention will be described.

The ZrO₂ sintered body of the present invention, which has been colored to have a deep black tone and has high strength, is prepared by a process comprising the steps of: mixing 97 to 99.8% by weight of the above partially stabilized ZrO₂ powder with at least one powder, as a colorant component powder, selected from the group consisting of powders of compounds of the group 2a, 4a, 6a, and 8 elements, the amount of at least one powder being 0.1 to 0.8% by weight in terms of each oxide powder and 0.2 to 3.0% by weight in total, thereby preparing a mixed powder; molding the mixed powder to prepare a compact; and sintering the compact in a vacuum having a pressure of not less than 10⁻² Torr or in an oxidizing atmosphere, at a temperature in the range of from 1,300 to 1,600°C. In this case, the expression "in a vacuum having an atmosphere pressure of not less than 10⁻² Torr" means not only the state of atmosphere obtained by bringing the state of the atmospheric pressure of air to vacuum or reduced pressure having a gas pressure of not less than 10⁻² Torr but also the state of pressure regulated, by an inert gas, to a gas pressure of not less than 10⁻² Torr. Further, the expression "in an oxidizing atmosphere" means such an oxygen-containing atmosphere state that a component constituting the compact causes oxidation in the step of heating for sintering.

The reason why the mixing ratio of the partially stabilized ZrO₂ powder to the colorant component powder is brought to the above range is as described above. The particle diameter of the raw material powder is preferably such that the partially stabilized ZrO₂ powder and the colorant component powder each have an average particle diameter of not more than 0.4 µm. The compound powder to be mixed as the colorant component powder may be an oxide powder. Alternatively, a compound may be used which is converted in the course of sintering under the above conditions to give an oxide. Compounds other than the oxide usable herein include, for example, organic salts, such as salts of oxalic acid, and inorganic acids, such as salts of carbonic acid.

When a plurality of metal elements selected from the elements of the groups above mentioned as the colorant component are incorporated, they may be incorporated in the form of a composite oxide containing them, or alternatively they may be incorporated in the form of compounds (hereinafter referred to as a "composite compound") which are converted in the course of sintering under the above conditions to form a composite oxide. The incorporation of the oxide in the form of a composite oxide is most preferred because, as compared with the incorporation of a plurality of single oxides which are reacted with each other in the course of sintering to form the same composite oxide, the same coloring effect can be generally attained in a smaller amount of the oxide incorporated and, at the same time, a sintered body having higher flexural strength can be provided. For example, as compared with the incorporation of NiO and Cr₂O₃ in single oxides as an equimolar mixture, the incorporation of a composite oxide NiCr₂O₄, a compound of equimolar amounts of these single oxides, is more effective and preferred. The composite oxide may be present together with a single oxide in the sintered body.

Various mixing methods may be utilized so far as the material powders can be finely and homogeneously mixed together. For example, methods involving grinding include those using a ball mill. Further, for example, inorganic or organic compounds of respective metals or metals capable of, upon heating, being converted to corresponding oxides are selected as starting materials, a coprecipitation mixture of these materials is prepared, and this mixture is mixed as a colorant component with the partially stabilized ZrO₂ powder. Molding may be carried out by a method suitably selected, according to the shape of a final product, from conventional powder pressing, hydrostatic pressing, injection molding, doctor blade, extrusion and the like.

As described above, the compact is sintered in a vacuum having a pressure of not less than 10⁻² Torr or in an oxidizing atmosphere at a temperature in the range of from 1,300 to 1,600°C. The sintering atmosphere is preferably an oxidizing atmosphere having a partial pressure of oxygen of not less than 120 Torr. When the sintering temperature is below 1,300°C, the densification is unsatisfactory. On the other hand, when it exceeds 1,600°C, the grain growth is significant. In both the above cases, the flexural strength and the impact value unfavorably deteriorate. In the case of sintering in vacuo, a colorant component powder is used which does not decompose or vaporize as an oxide during heating for sintering. For example, when an oxide having a high vapor pressure in vacuo or under reduced pressure or a compound capable of forming such an oxide, such as an oxide of cobalt, is used as the colorant component, sintering in vacuo should be avoided. When such an oxide is used, sintering is carried out in an oxidizing atmosphere having a partial pressure of oxygen of not less than 120 Torr. The above sintering provides a sintered body having a relative density of not less than 93%.

Further, in the present invention, in order to accelerate black coloring, a carbon powder or, instead of the carbon powder, a compound powder, which, upon heating for sintering, leaves carbon, may be previously incorporated. Previous homogeneous dispersion of carbon permits both the surface and interior of the sinter to be more homogeneously black colored as compared with sintering in a carbon atmosphere. The carbon powder is preferably constituted of fine particles. An example of such a carbon powder is a carbon black powder. As the compound which leaves carbon, for example, a phenolic resin may be used.

The amount of these materials to be incorporated is such as will not inhibit the sinterability, i.e., up to 3.0% by weight, in terms of the amount of carbon based on the whole amount of the powder mixture of the partially stabilized ZrO₂ and the colorant component.

Further, according to the process of the present invention, the colorant component powder added may be at least one member selected from the compound powders capable of forming oxides of the group 2a, 4a, 6a, and 8 elements under the above sintering conditions. Among others, a powder of a magnesium compound is preferably used as the powder of a compound of the group 2a element, a powder of a titanium and/or hafnium compound is preferably used as the powder of the group 4a compound, a powder of a chromium compound is preferably used as the powder of the group 6a compound, and a compound of an iron, cobalt and/or nickel powder is preferably used as the powder of the group 8 element. The reason why these powders are preferred is that they are relatively inexpensive and has excellent coloring effect.

Among the compounds powders of the above 7 elements, combined use of a powder of a compound of chromium as a group 6a element and a powder of a compound of cobalt as a group 8 element, or use of a composite compound containing both chromium and cobalt is still preferred. In this case, addition of the powder(s) is carried out so that the weight ratio of the chromium element to the cobalt element satisfies the formula 0.3 ≤ Co/Cr ≤ 2. Preparation of a mixed powder in this weight ratio followed by molding and sintering according to the process of the present invention can provide a more deeply black-colored sintered body, as described above, wherein both the surface and the interior thereof have a black color falling within the following respective sensory color index ranges L* ≤ 20, -1 ≤ a* ≤ 1, and -3 ≤ b* ≤ 2 according to the specification of color of materials specified in JIS Z8729.

In addition to the partially stabilized ZrO₂ powder and the colorant component powder, a small amount of aluminum oxide powder may be further added to the mixed powder according to the present invention. In this case, the amount of the aluminum oxide powder added is 0.1 to 2.0% by weight based on the total weight of the partially stabilized ZrO₂ powder and the colorant component powder. Additional mixing of the aluminum oxide powder followed by molding and sintering according to the process of the present invention can provide a sintered body which, as described above, comprises fine, partially stabilized ZrO₂ crystal grains having an average particle diameter of not more than 0.4 µm and possesses a sensory color of a deep black tone falling within the above index range and a four-point flexural strength of not less than 110 kg/cm².

Further, in the present invention, the resultant sintered body may be subjected to hot isostatic pressing, that is, HIP, under a pressure of not less than 200 kg/cm² at a temperature in the range of from 1300 to 1600°C. HIP can eliminate residual voids, realizing a more dense sintered body.

The colorant component in the black ZrO₂ sintered body of the present invention prepared by the above process is microscopically very homogeneously distributed. The homogeneity is such that, when a fracture surface is observed under a scanning electron microscope (magnification: 8,000 times) (conditions for observation: for example, acceleration voltage 20 kV, applied current 0.2 nA, and applied beam diameter 60 to 100Å), the number of indication masses, having an area of not less than 1 µm square, comprised of two or more metals as the colorant component observed within the field of view of 10 µm square is at least three.

### Example 1

A ZrO₂ powder, which had been partially stabilized by Y₂O₃, with an average particle diameter of 0.4 µm, a colorant component powder composed of a combination of colorants each with an average particle diameter of 0.4 µm according to formulation and weight ratio specified in Table 1, and an Al₂O₃ powder with an average particle diameter of 0.4 µm were homogeneously mixed together by means of a wet ball mill, and the mixture was then dried to prepare a mixed powder. Separately, the mixed powder and a carbon black powder having an average particle diameter of 0.1 µm were moistened with a small amount of alcohol and homogeneously kneaded together and granulated to prepare a mixed powder. The mixed powders thus obtained were subjected to powder press molding under a pressure of 500 kg/cm² to prepare compacts each having a size of 5 mm in width x 45 mm in length x 4 mm in thickness. The compacts were then sintered in the air at an atmospheric pressure under conditions of sintering temperature 1480°C and sintering time 4 hr. For samples 4 and 10 listed in Table 1, HIP was further conducted in an argon gas under conditions of pressure 1000 kg/cm², pressing temperature 400°C, and pressing time 1 hr.

The sintered bodies thus obtained were ground to prepare specimens each having a size of 4 mm in width x 36 mm in length x 3 mm in thickness which were then measured for the average diameter of ZrO₂ particles, the four-point flexural strength of the sintered bodies, the relative density, and the Charpy impact value. The specimens were further subjected to abrasive finishing so that they had a surface roughness Ra of not more than 0.02 µm in one surface and a section around the center in the thicknesswise direction of the specimens, followed by measurement of the sensory color of each face with a spectrophotometric colorimeter. The results are summarized in Table 2. Data for samples 38 and 39 in Table 2 are on evaluation results after HIP of samples 4 and 10, listed in Table 1, under the above conditions. These sintered bodies were analyzed by X-ray diffractometry to obtain X-ray diffraction patterns. As a result, for all the sintered bodies, peaks derived from tetragonal or monoclinic ZrO₂ and peaks considered to derive from each colorant and a reaction product of the colorant were observed. Further, for sample 26, the formation of MgCrO₄ was confirmed, while, for sample 28, the formation of CoCrO₄ and NiFe₂O₄ were observed.

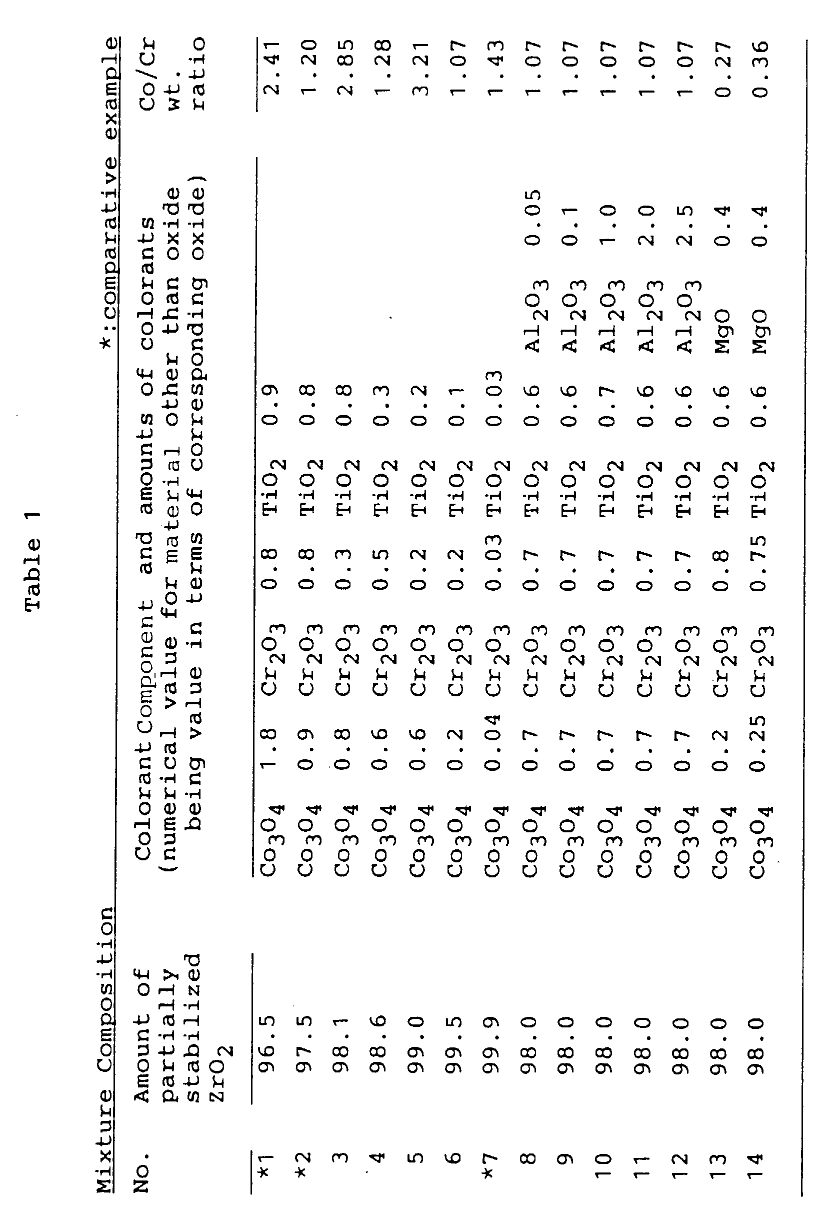

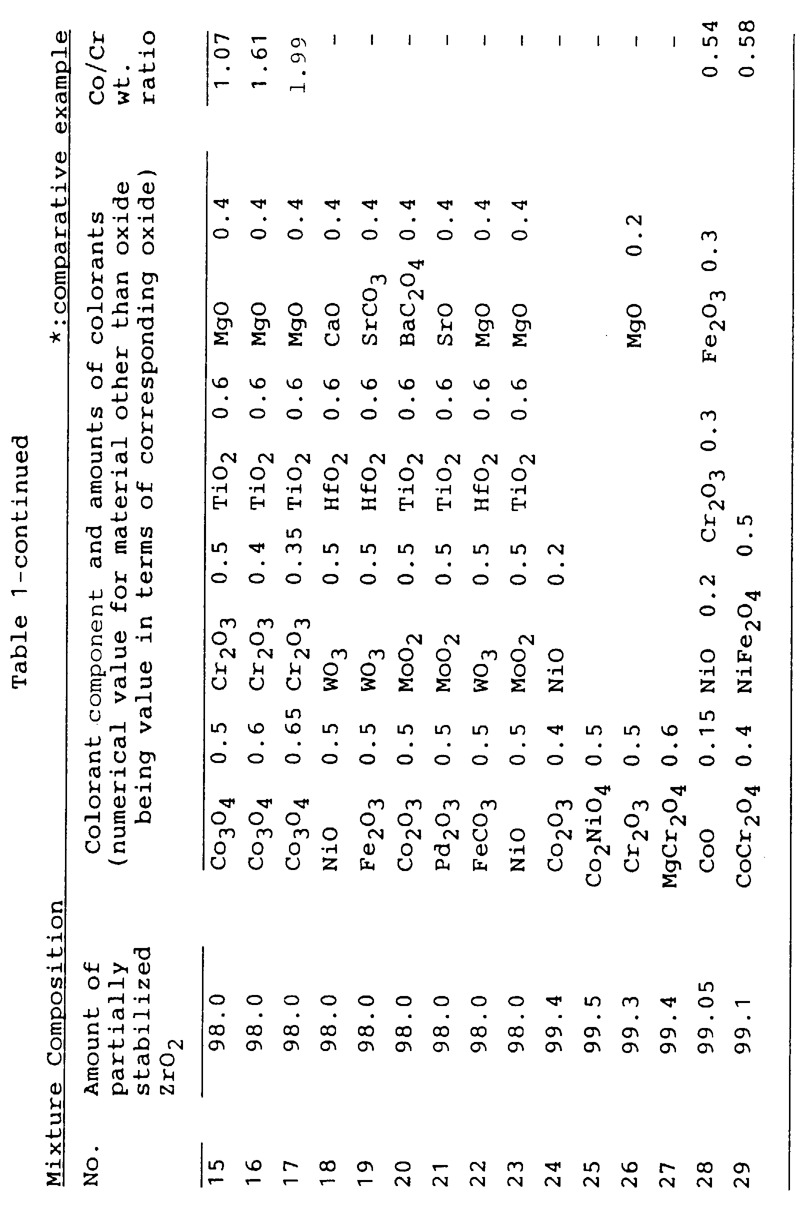

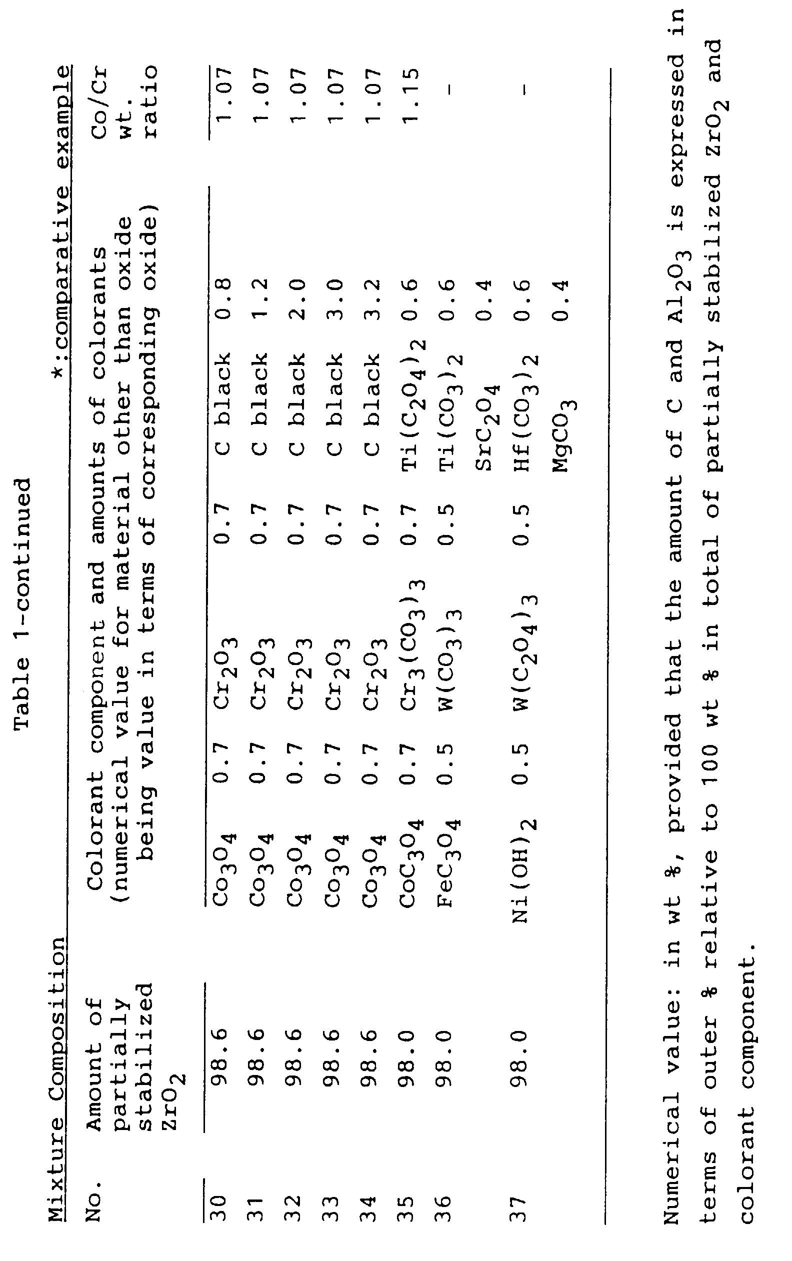

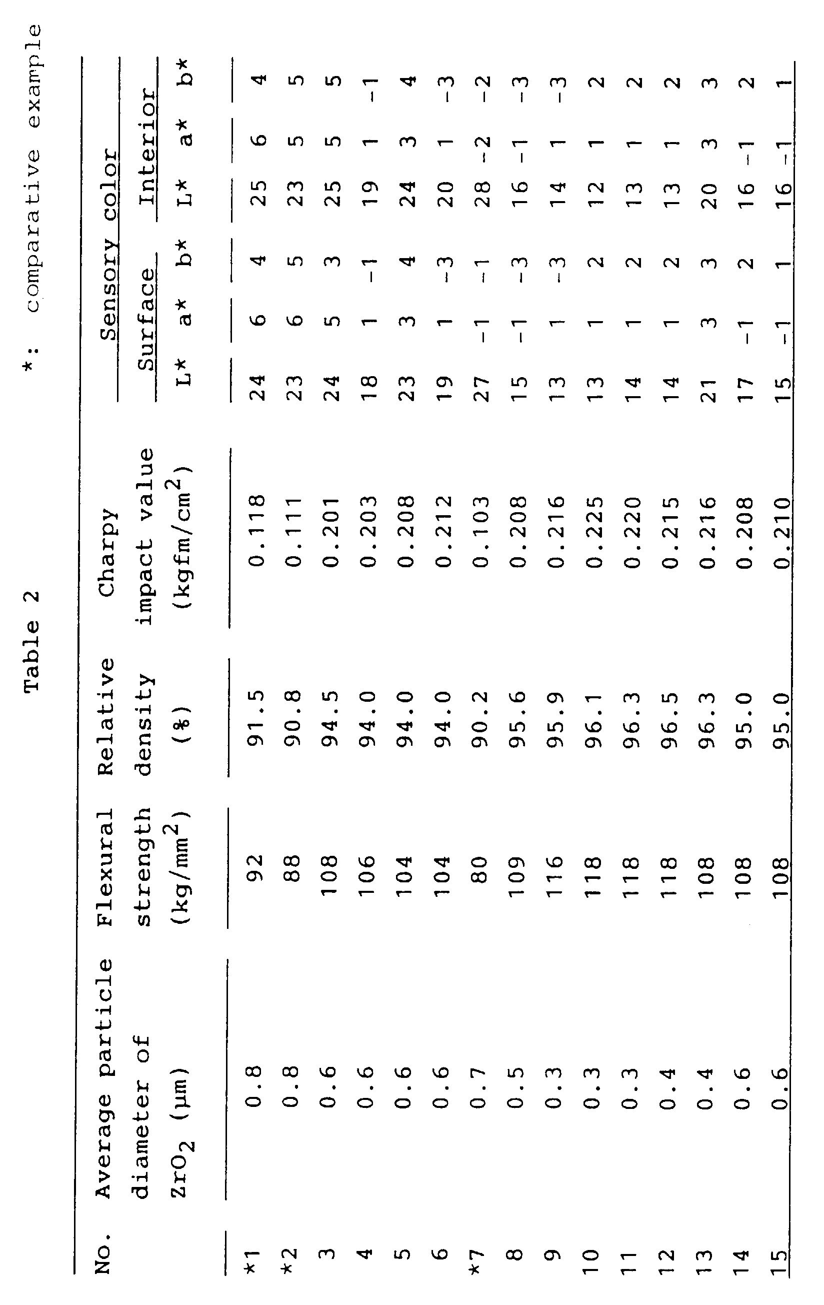

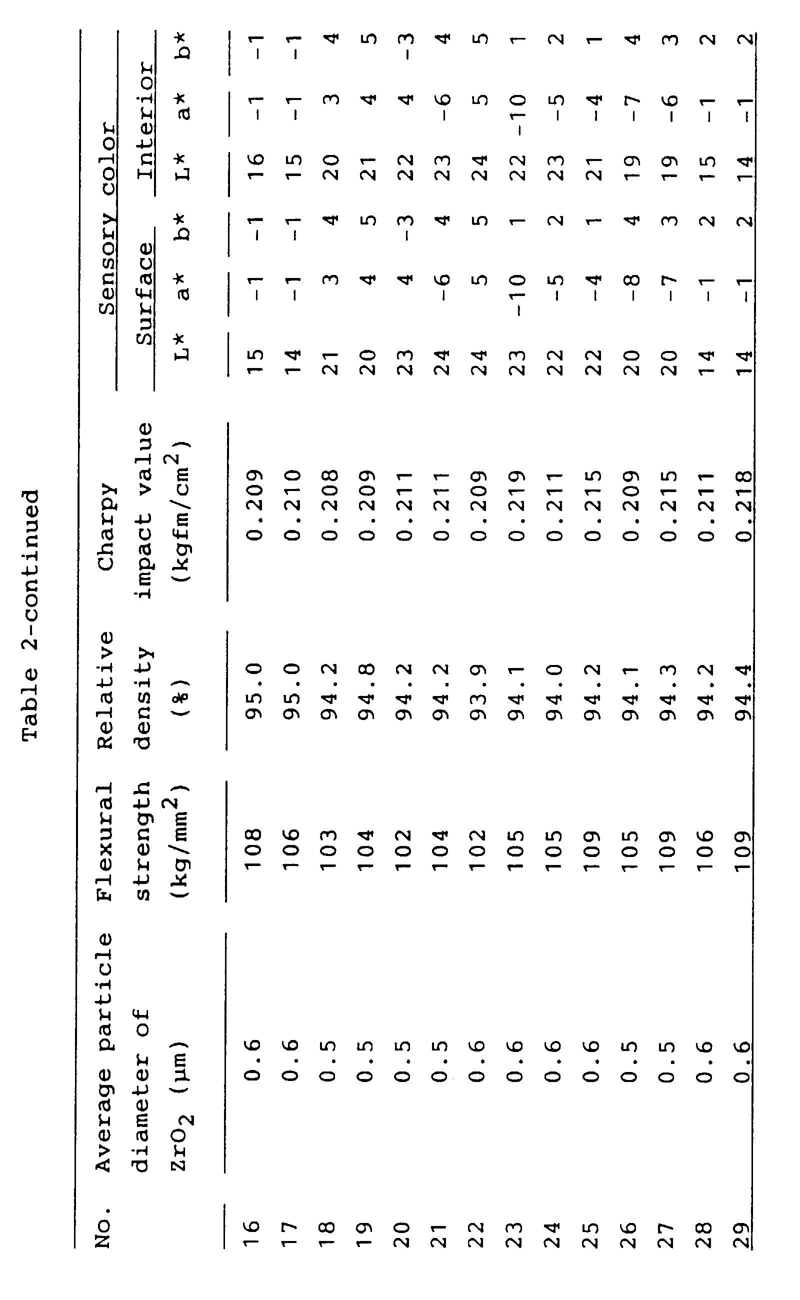

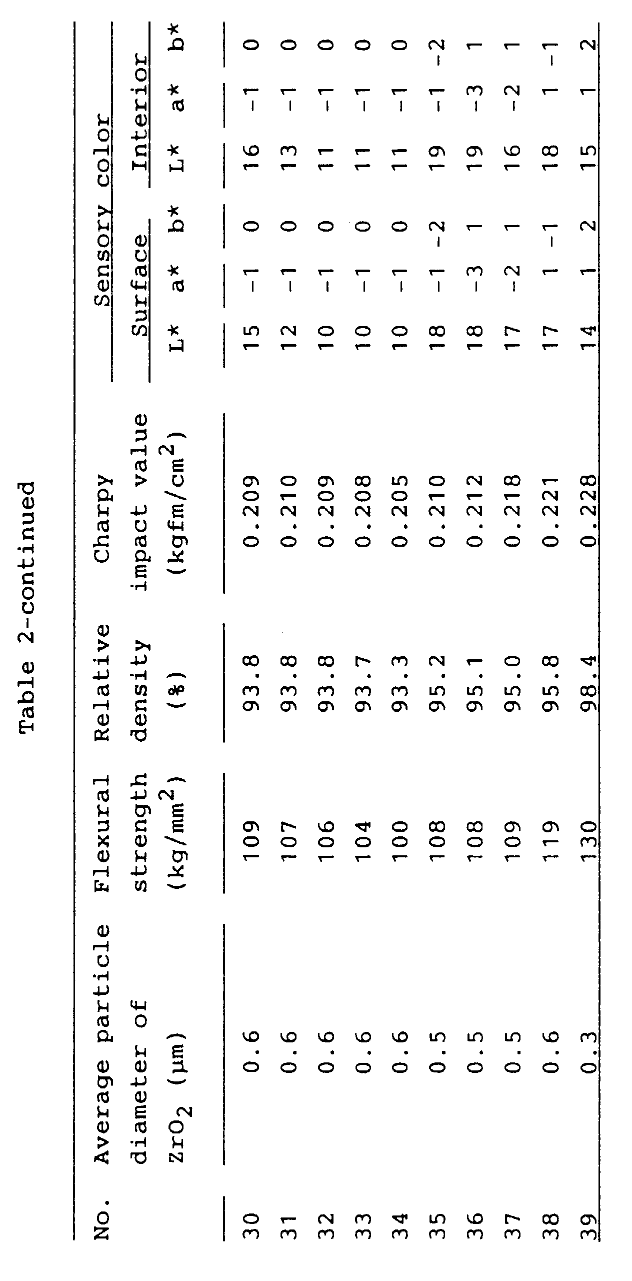

Further, a mixed powder having the same composition as sample 4 was prepared. In this case, however, both the partially stabilized ZrO₂ and the colorant component used had an average particle diameter of 0.6 µm. The mixed powder thus obtained was sintered under the same conditions as used for sample 4 to prepare a sintered body from which 30 specimens having the same shape as the specimen of sample 4 were prepared and evaluated. As a result, the four-point flexural strength of the 30 specimens ranged from 100 to 105 kg/mm². On the other hand, a mixed powder was prepared using a partially stabilized ZrO₂ and a colorant component each having the same average particle diameter as those used in sample 4, and the mixed powder thus obtained was sintered under the same conditions as used for sample 4 to prepare a sintered body from which 30 specimens were prepared and evaluated. As a result, the four-point flexural strength of the 30 specimens ranged from 106 to 109 kg/mm², indicating that the sintered body had higher strength.

A compact of a mixed powder comprising a powder of sample 36 or 37 and 1.2% by weight of a carbon black powder, additionally incorporated therein, having an average particle diameter of 0.1 µm was sintered at 1,480°C in a vacuum atmosphere having a pressure of 2 x 10⁻¹ Torr for 4 hr. The resultant sintered body had substantially the same average particle diameter, relative density, flexural strength, and impact value as that prepared by sintering in the air under atmospheric pressure. Regarding the sensory color, both the surface and the interior of the sintered bodies had a color tone falling within the following ranges: L* = 11 to 12, a* = -2 to 0, and b* = 0 to 1, indicating that the sintered bodies thus prepared had a deeper black tone than the samples 36 and 37. As a result of analysis, it was found that the sintered bodies with carbon black incorporated therein had a free carbon content of 0.8% by weight. For sample Nos. 30 to 34, with carbon black incorporated therein, which had been sintered in the air, the sintered bodies had a free carbon content of 0.3 to 2.1% by weight.

The above results lead to the following conclusions.
(1) A total amount of colorants constituting the colorant component outside the range of from 0.2 to 3.0% by weight is unfavorable for the following reason. When the total amount is less than 0.2% by weight, the sensory color is outside the scope of the present invention, making it impossible to provide a sintered body having a deep black color. On the other hand, a total amount exceeding 3.0% by weight cannot provide a sintered body having a high strength of not less than 100 kg/mm² in terms of the flexural strength and a high impact value of not less than 0.2 kgfm/cm². Further, when the content of any one colorant constituting the colorant component is outside the range of from 0.1 to 0.8% by weight, the flexural strength or the impact value deteriorates, or otherwise the sensory color is outside the scope of the present invention, as is apparent from comparison of samples 1 to 7.
(2) When aluminum oxide (Al₂O₃) is added separately from the colorant component, particularly when the amount of aluminum oxide added is in the range of from 0.1 to 2.0% by weight based on 100% by weight in total of the partially stabilized ZrO₂ and the colorant component, the average particle diameter of ZrO₂ lowers and, at the same time, the flexural strength is improved, as is apparent from comparison of samples 8 to 12.
(3) Use of a colorant component containing cobalt and chromium in combination as the colorant component results in deeper sensory color when Co/Cr weight ration = 0.3 to 2.0, as is apparent from comparison of samples 13 to 17.
(4) Previous addition of the oxide, as a colorant component, in the form of a composite oxide, as compared with the addition of a combination of single oxides, which finally form the above composite oxide, enables the same effect of deepening the black color tone of the sintered body to be attained in a smaller total amount of the oxide added and, at the same time, a sintered body having higher flexural strength to be prepared, as is apparent from comparison of samples 24 and 25, 26 and 27, and 28 and 29.
(5) When a small amount of carbon is incorporated as an additional colorant component, the amount of carbon added is preferably not more than 2.5% by weight. If it is added in an amount exceeding 2.5% by weight, the coloring effect is saturated and, further, the flexural strength of the sintered body unfavorably deteriorates, as is apparent from comparison of samples 30 to 34.
(6) Use of a raw material powder having an average particle diameter of not more than 0.4 µm results in the formation of a sintered body having higher flexural strength in combination with higher impact value.
(7) The sintered body can further densified by HIP and has improved flexural strength and impact value, as is apparent from comparison of samples 38 and 39.
(8) Addition of a small amount of carbon increases the depth of the black color tone.

### Example 2

Moldings of the mixture compositions of sample Nos. 4, 10, and 18 listed in Table 1 of Example 1 were sintered under respective sintering conditions specified in Table 3 to prepare sintered bodies from which specimens having the same shape as those in Example 1 were prepared. The specimens were evaluated, and the results are summarized in Table 4. Regarding the atmosphere during the sintering, argon was added to oxygen having a partial pressure specified in Table 3 to regulate the total pressure to the atmospheric pressure. It should be noted that the term "vacuum" used in the table means that the interior of the furnace under atmospheric pressure was simply evacuated to an indicated pressure. For samples 50 to 56, HIP was conducted under the pressures shown in Table 3, after the sintering.

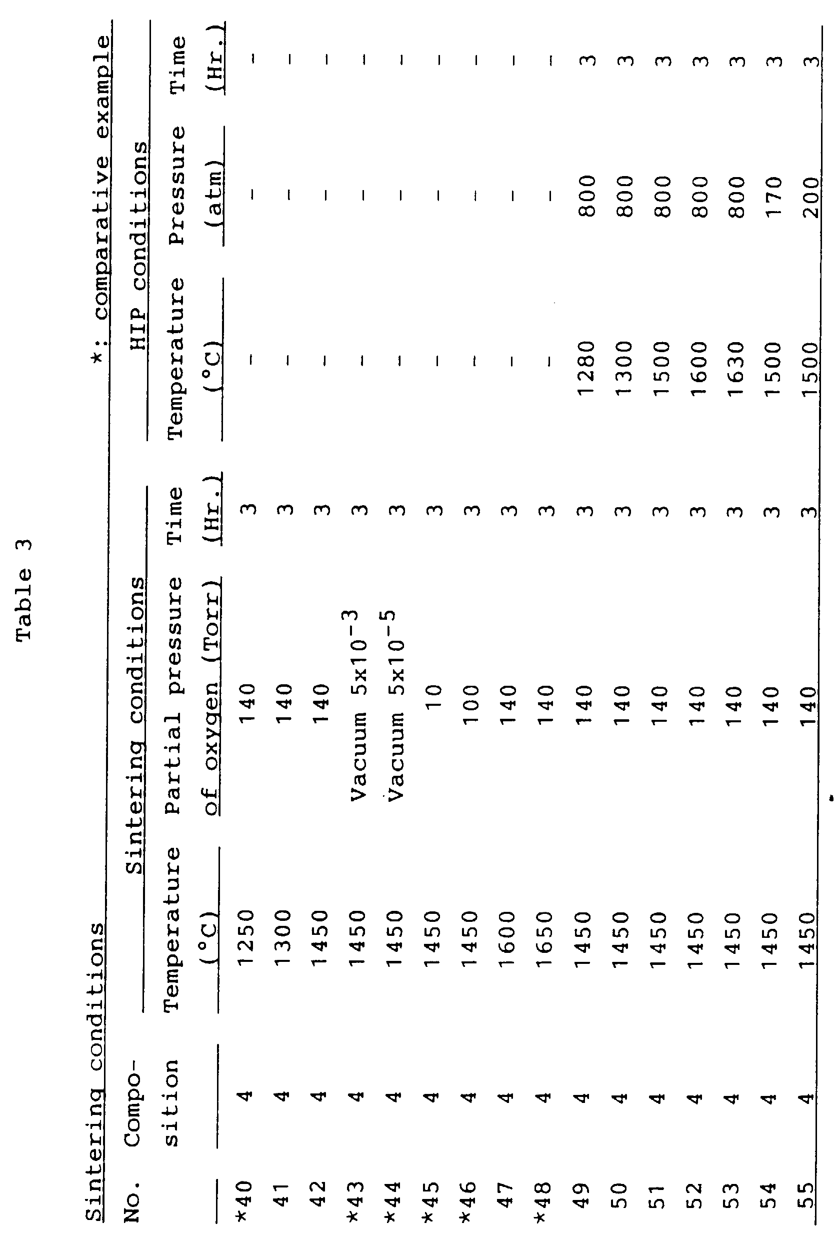

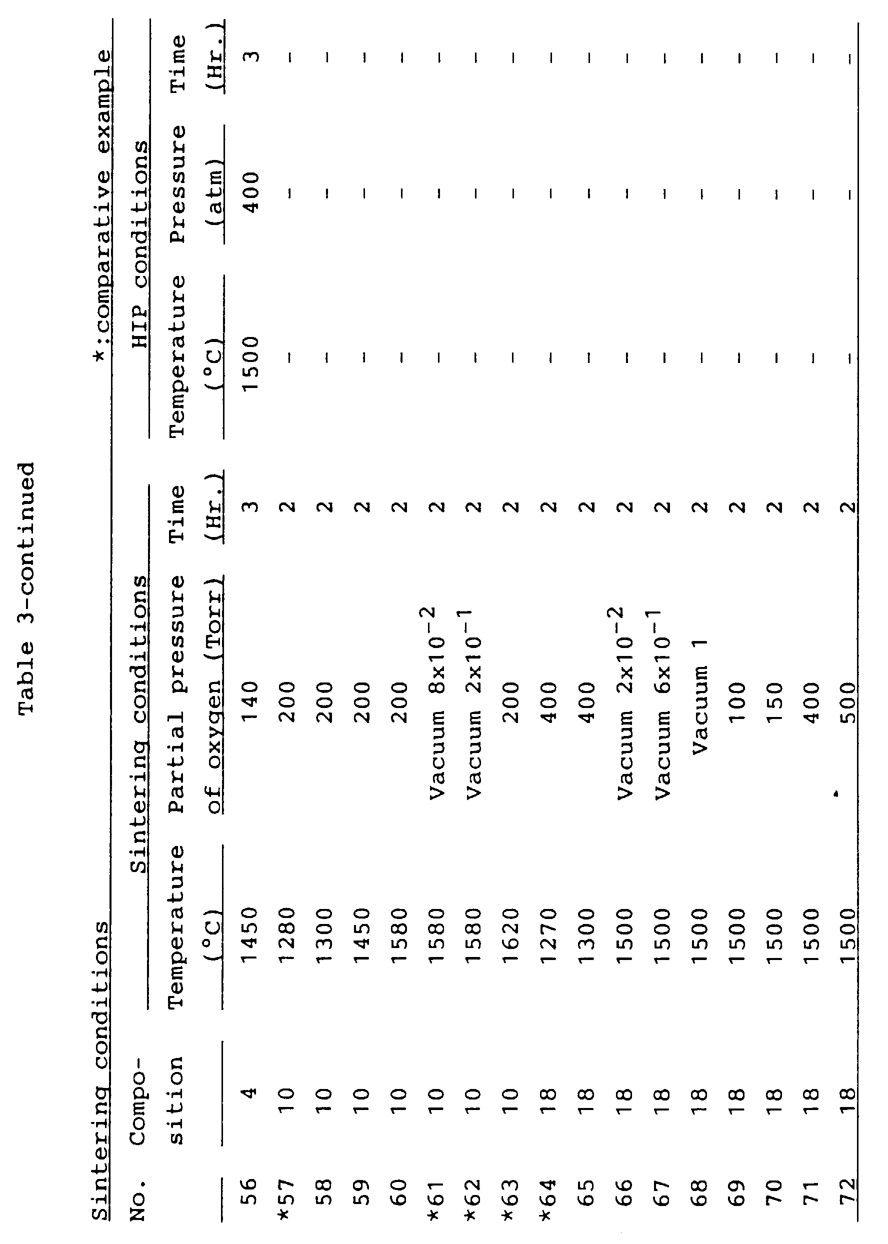

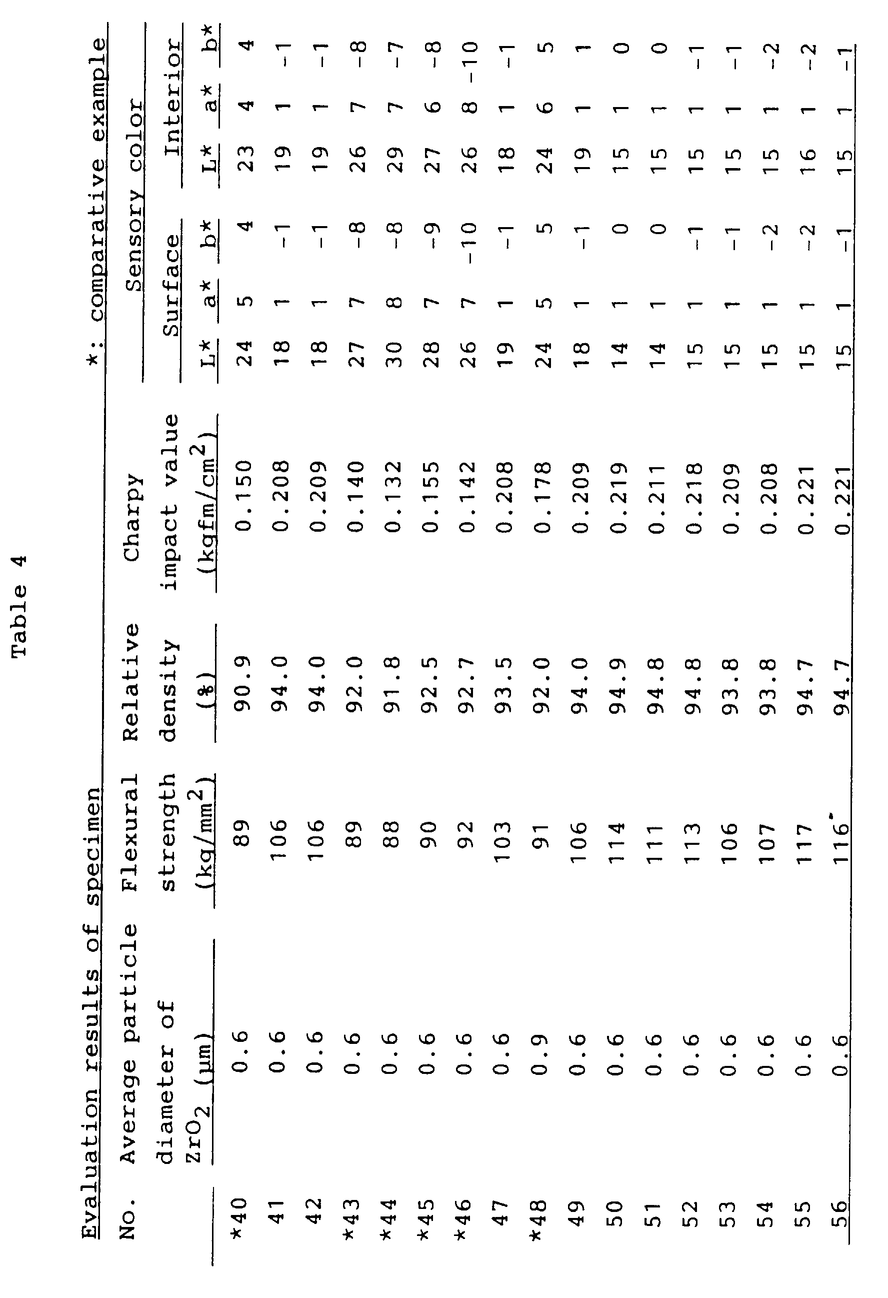

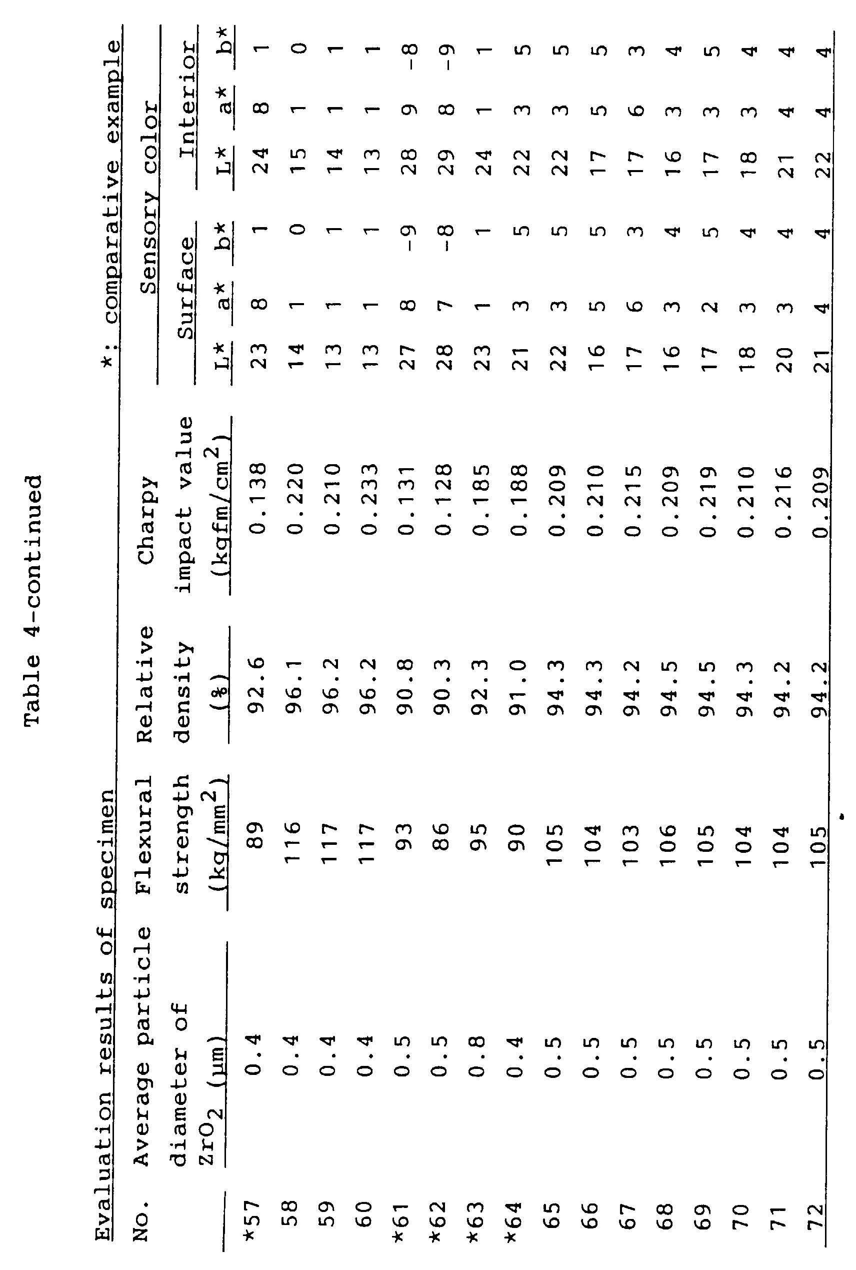

A compact of the mixture composition of sample No. 18 was sintered under conditions of different partial oxygen pressures exceeding 500 Torr, sintering temperature 1,500°C, and sintering time 2 hr. As a result, partial oxygen pressures exceeding 500 Torr offered substantially no improvement in depth of the black color tone. Therefore, about 500 Torr is considered suitable as the upper limit of the partial pressure of oxygen during sintering from the practical viewpoint.

The above results lead to the following conclusions.
(1) When the sintering temperature is below 1,300°C, the densification of the sintered body is unsatisfactory, while a temperature exceeding 1,600°C results in remarkable particle growth. Therefore, in both cases,the flexural strength and the impact value are deteriorated, as is apparent from comparison of samples 40, 42, 47, and 48.
(2) When sintering is performed at a temperature in the range of from 1,300 to 1,600°C in vacuo, use of a colorant component, which decomposes or evaporates under such conditions, for example, use of an oxide of cobalt, which vaporizes under the above conditions, as the colorant component, results in unsatisfactory densification of the sintered body, making it impossible to realize black coloring of the sintered body contemplated in the present invention. In this case, sintering should be performed at a partial pressure of oxygen of not less than 120 Torr (see sample Nos. 4 and 10).
(3) On the other hand, when a colorant component, which is not subjected to decomposition or vaporization under the above conditions, the contemplated sintered body can be prepared either at a partial pressure of oxygen of not less than 120 Torr or in vacuo (see sample 18). As described above in connection with the result (8) of Example 1, the addition of such a colorant component has a tendency that, as compared with sintering under the partial pressure of oxygen, the sintering in vacuo offers a smaller lightness index value L*, increasing the blackness.
(4) Preferably, HIP after the sintering is performed under conditions of a pressure of not less than 200 kg/cm² and a temperature in the range of from 1,300 to 1,600°C, as is apparent from comparison of samples 49 to 56.

### Example 3

Different colorant component powders having an average diameter in the range of from 0.2 to 0.4 µm and a carbon powder having an average diameter of 0.1 µm were added to a powder of ZrO₂, which had been partially stabilized with CaO, having an average particle diameter of 0.3 µm, in respective amounts specified in Table 5. The mixed powders were then sintered under different sintering conditions specified in Table 5, and the sintered bodies were ground to prepare specimens, for evaluation, having the same shape as those in Example 1. The sample with the carbon powder incorporated therein was provided in the same manner as in Example 1. These specimens were evaluated on the same items as described in Example 1. The results are summarized in Table 6. It should be noted that the expression "partial pressure of oxygen" in the column of "atmosphere" in Table 6 means that sintering was performed in an atmosphere composed of oxygen and argon gas with the pressure of the atmosphere being brought to the atmospheric pressure so as to have an indicated partial pressure of oxygen, and the expression "In nitrogen, C included" means that a graphite vessel was used in order to form a carbon-containing atmosphere within the furnace under atmospheric pressure of nitrogen. Further, in the same column, the expression "In CO gas" means that sintering was performed under atmospheric pressure of carbon monoxide, and the expression "In argon, buried in C" means that sintering was performed under atmospheric pressure of argon with the compact buried in a carbon black (C black) powder.

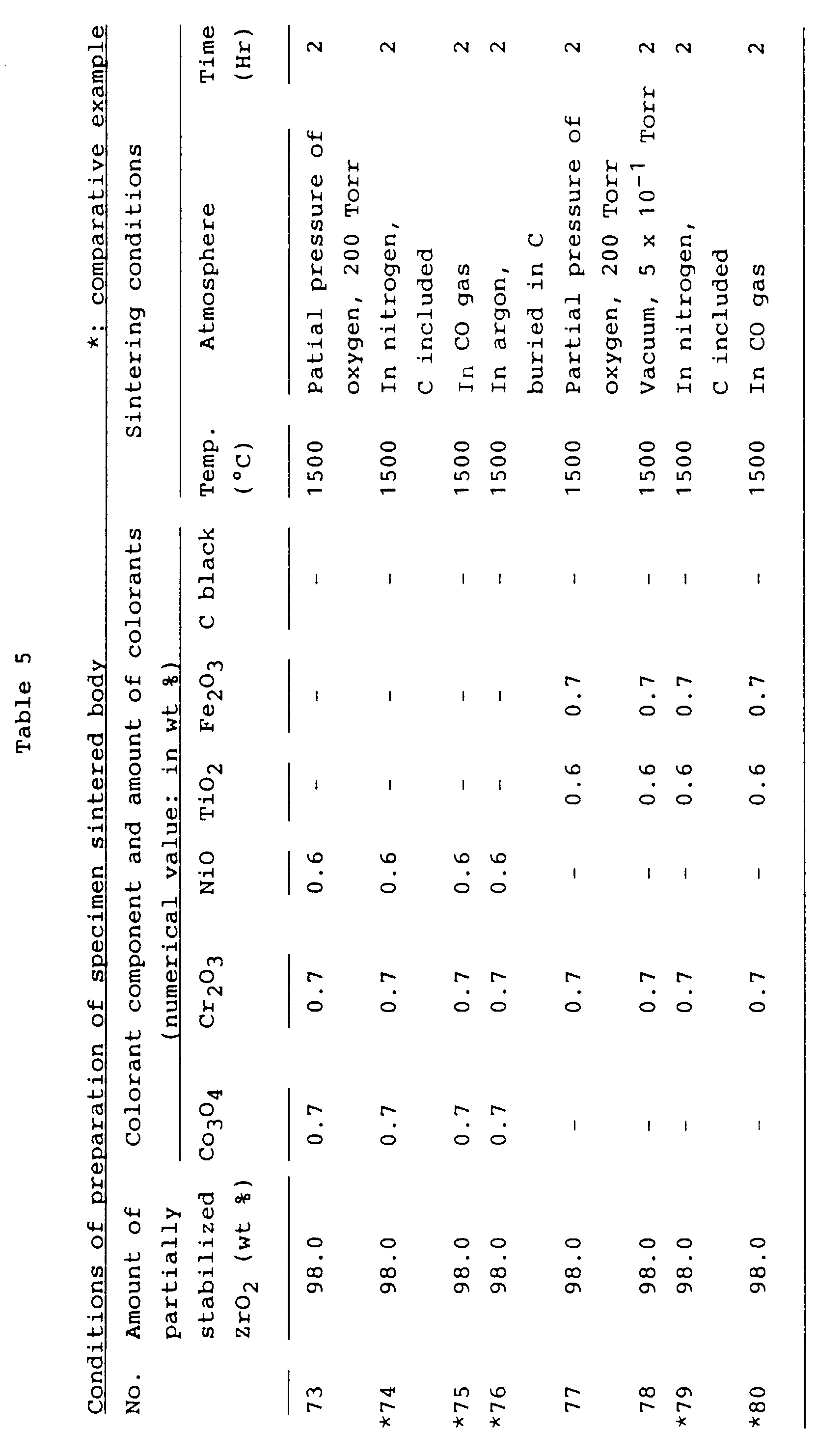

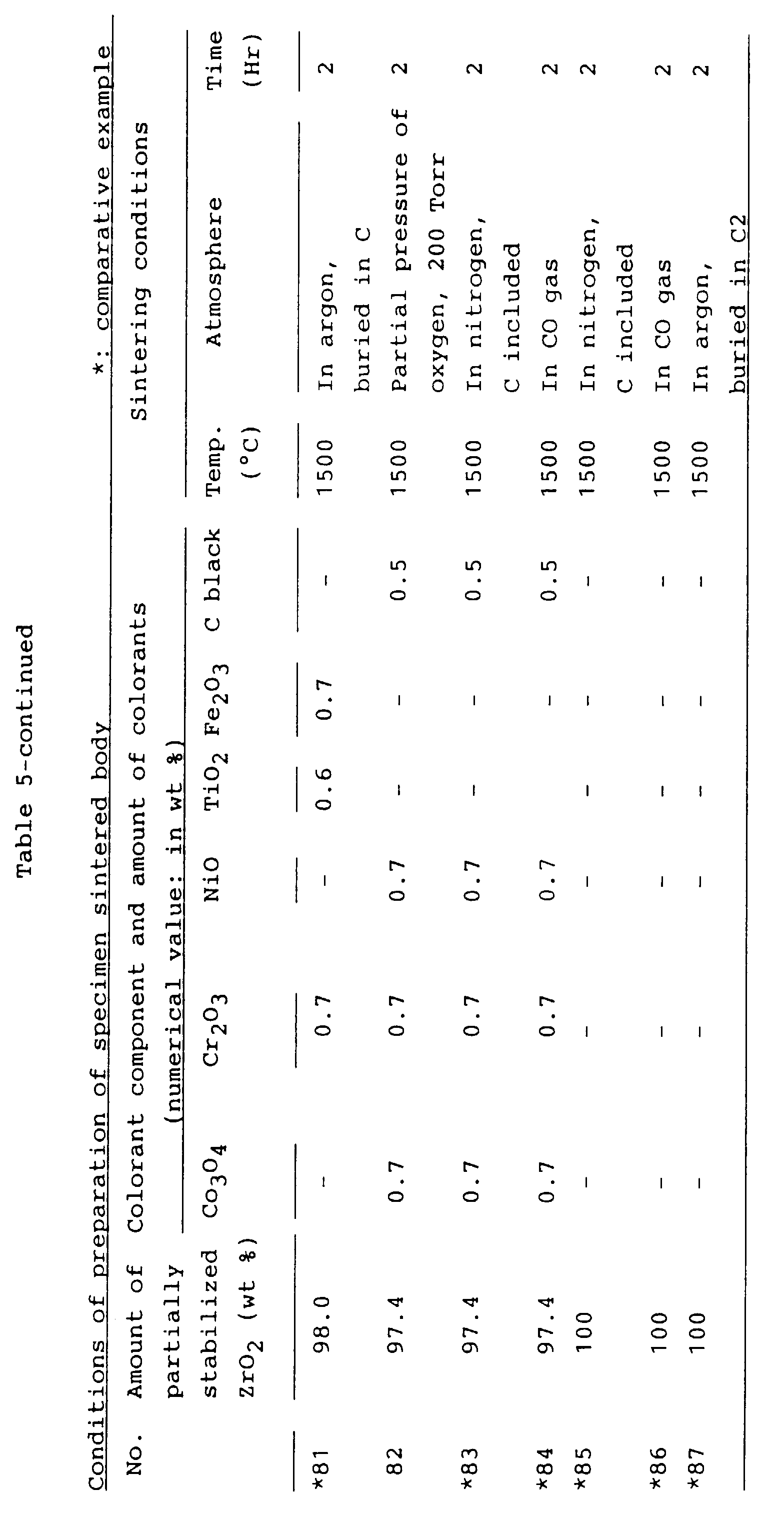

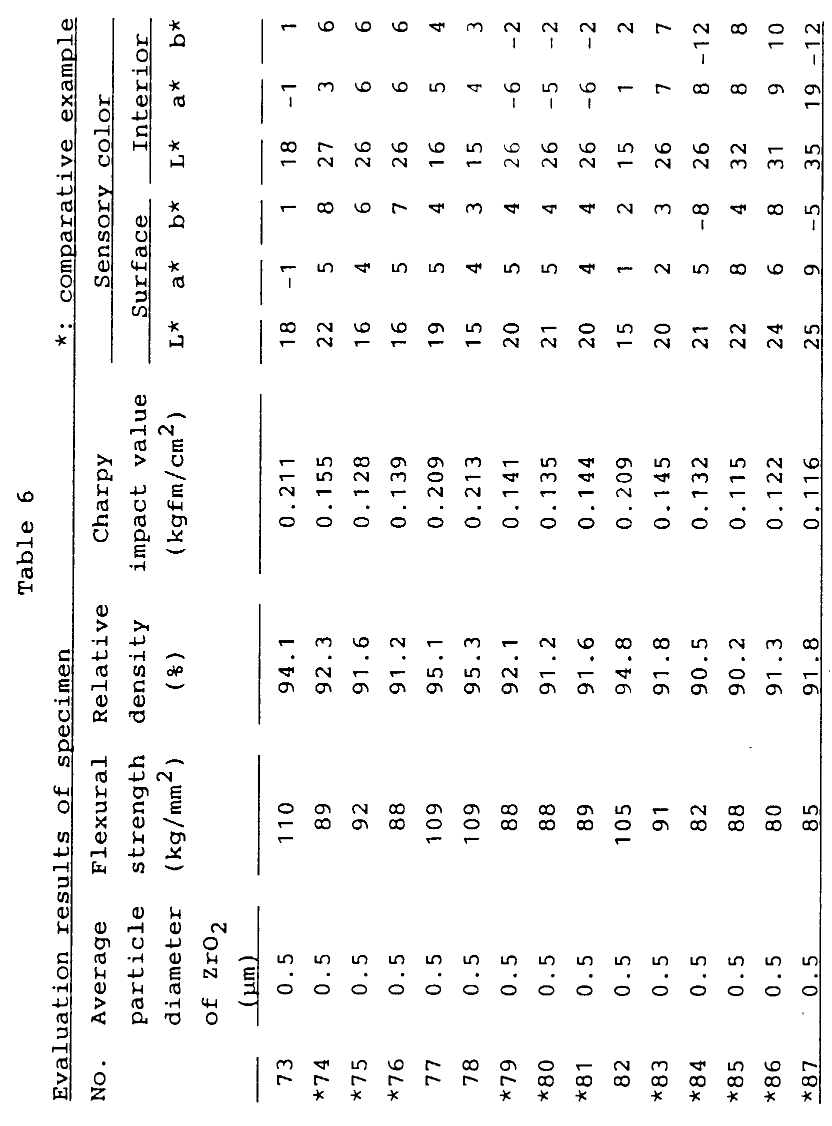

For samples 74 to 76, 79 to 81, and 83 to 87, presence of zirconium carbide (ZrC) as the colorant component was clearly confirmed by X-ray diffractometry, with the amount of zrC present in the interior of the sintered body being considerably smaller than that present in the surface of the sintered body. The above results lead to the following conclusions.
(1) When the compact of the partially stabilized ZrO₂ containing the colorant component according to the present invention is sintered in a non-oxidizing atmosphere or a carbon-containing atmosphere rather than in vacuo or under reduced pressure (samples 74 to 76, 79 to 81, and 83 to 87), black-colored sintered bodies could be prepared. In this case, however, the sensory color is outside the scope of the present invention (samples 73, 77, and 78), and any sintered body with both the interior and the exterior surface thereof being homogeneously colored to have a deep black tone could not be prepared.
(2) When a compact composed of the partially stabilized ZrO₂ alone without incorporation of the colorant component is sintered in a non-oxidizing or a carbon-containing atmosphere (samples 85 to 87), as with the above (1), any black ZrO₂ sintered body having a sensory color falling within the scope of the present invention could not be prepared.
(3) Comparison of the sintered body of the present invention (sample 82), wherein carbon has been previously incorporated and homogeneously dispersed in a mixed powder, with the comparative sintered body wherein carbon was impregnated during sintering by placing the compact of the mixed powder within a carbon-containing atmosphere or by directly contacting the compact of the mixed powder with carbon without previous incorporation of carbon (the comparative sample) also shows that, in the sintered products of the present invention, both the surface and the interior are more homogeneously black colored than those in the comparative products.

As is apparent from the foregoing description, the present invention can provide a black zirconia sintered body which has high strength and a deep black color tone unattainable by the prior art and is highly valuable as a decorative component from the practical viewpoint.

## Claims

1. A black zirconia sintered body comprising partially stabilized zirconia as a main component and a colorant component consisting of at least one oxide of the group 2a, 4a, 6a, and 8 elements, the amount of the at least one oxide being between 0.1 and 0.8% by weight in terms of the amount of any one oxide and between 0.2 and 3.0% by weight in total, both the surface and the interior of the sintered body having a black colour with L*, a* and b* falling within the following respective ranges L* ≤ 25, -15 ≤ a* ≤ 6, and -9 ≤ b* ≤ 5 according to the sensory colour index specified in JIS Z8729, the sintered body having a four-point flexural strength of not less than 100 kg/mm² as measured according to the procedure set forth in JIS R1601.

2. A black zirconia sintered body according to claim 1, wherein both the surface and the interior thereof have a black colour with L*, a* and b* falling within the following respective ranges L* ≤ 20, -1 ≤ a* ≤ 1, and -3 ≤ b* ≤ 2 according to the sensory colour index specified in JIS Z8729.

3. A black zirconia sintered body according to claim 1 or 2, wherein the average particle diameter of the partially stabilized zirconia is not more than 0.6 µm.

4. A process for preparing a black zirconia sintered body, comprising the steps of: mixing between 97 and 99.8% by weight of a partially stabilized zirconia powder with at least one colorant component powder consisting of at least one compound of group 2a, 4a, 6a and 8 elements, the amount of at least one powder being between 0.1 and 0.8% by weight in terms of any one compound and between 0.2 and 3.0% by weight in total, thereby preparing a mixed powder, molding the mixed powder to prepare a compact; and sintering the compact at a temperature in a range from 1,300 to 1,600°C in a vacuum having a pressure of not less than 10⁻² Torr or in an oxidizing atmosphere .

5. The process according to claim 4, wherein the compact is sintered in an oxidizing atmosphere having a partial pressure of oxygen of not less than 120 Torr.

6. A process according to claim 4 or 5, wherein the sintered body is subjected to hot isostatic pressing under a pressure of not less than 200kg/cm² at a temperature in the range of from 1,300 to 1,600°C.

7. A black zirconia sintered body or a process for preparing it according to any one of the preceding claims, wherein the colorant component is a composite oxide or powder.

8. A black zirconia sintered body or a process for preparing it according to any one of the preceding claims, wherein the colorant component contains at least one element selected from the group consisting of magnesium, hafnium, titanium, chromium, iron, cobalt, and nickel.

9. A black zirconia sintered body or a process for preparing it according to any one of the preceding claims, wherein the colorant component contains both cobalt and chromium with the weight ratio of the cobalt content to the chromium content being 0.3 ≤ Co/Cr ≤ 2.0.

10. A black zirconia sintered body or a process for preparing it, according to any one of the preceding claims, wherein a carbon powder or a compound powder which leaves carbon upon sintering is incorporated in an amount up to 2.5% or 3.0% by weight, in terms of the amount of carbon, based on 100% by weight in total of the zirconia powder and the colorant component.

11. A black zirconia sintered body or a process for preparing it according to any one of the preceding claims, wherein the black zirconia sintered body further comprises aluminium oxide and/or an aluminate of at least one element constituting the colorant component in an amount between 0.1 and 2.0% by weight, in terms of aluminium oxide, based on 100% by weight in total of the partially stabilized zirconia and the colorant component.
